# EUROPÄISCHE PATENTANMELDUNG

(11) **EP 1 961 945 A2**
(43) Veröffentlichungstag der Anmeldung: **27.08.2008**
(21) Anmeldenummer: 08002330.2
(22) Anmeldetag: 08.02.2008
(51) Int. Cl.: F02K 9/52

(54) **Einspritzkopf für die Brennkammer eines Raketentriebwerks**

(30) Priorität: 21.02.2007 DE 102007008942
(71) Anmelder: Astrium GmbH, 81663 München (DE)
(72) Erfinder: Grauer, Frank, 83646 Bad Tölz (DE); Hagemann, Gerald, Dr., 85586 Poing (DE)
(74) Vertreter: Hummel, Adam

(57) **Zusammenfassung**

Die Erfindung beschreibt einen Einspritzkopf (1) für die Brennkammer (2) eines Raketentriebwerks, der eine Grundfläche aufweist, über die eine Anzahl an Einspritzelementen (5) verteilt angeordnet ist. Dabei sind jeweils aus einem Auslass (6) der Einspritzelemente (5) Treibstoffkomponenten in die Brennkammer (2) einspritzbar, so dass durch eine Vermischung und Verbrennung der Treibstoffkomponenten in der Brennkammer (2) ein Heißgas erzeugbar ist, welches zur Erzeugung von Schub auf eine hohe Geschwindigkeit beschleunigbar ist. Die Grundfläche des Einspritzkopfs (1) weist eine konturierte Gestalt auf, wobei durch die konturierte Gestalt die Entstehung von Zonen mit reduziertem Druck, insbesondere zwischen unmittelbar benachbarten Auslässen (6), verhindert oder zumindest vermindert wird.

## Beschreibung

Die Erfindung betrifft einen Einspritzkopf für die Brennkammer eines Raketentriebwerks, der eine Grundfläche aufweist, über die eine Anzahl an Einspritzelementen verteilt angeordnet ist, wobei jeweils aus einem Auslass der Einspritzelemente Treibstoffkomponenten in die Brennkammer einspritzbar sind, so dass durch eine Vermischung und Verbrennung der Treibstoffkomponenten in der Brennkammer ein Heißgas erzeugbar ist, welches zur Erzeugung von Schub auf eine hohe Geschwindigkeit beschleunigbar ist.

In die Brennkammer eines Raketentriebwerks werden die Treibstoffkomponenten durch Einspritzelemente eingebracht. Im Fall eines Flüssigraketenmotors werden als Treibstoffkomponenten ein Oxidator und der eigentliche Kraftstoff benötigt. Durch die Einspritzung der Treibstoffkomponenten in die Brennkammer werden diese miteinander vermischt und verbrannt. Bei der Verbrennung wird ein Heißgas bei hoher Temperatur und Druck erzeugt. Durch die Expansion des Heißgases auf eine hohe Geschwindigkeit innerhalb der Brennkammer wird die thermische Energie des Heißgases in kinetische Energie umgewandelt, wodurch Schub erzeugt wird.

Die Effizienz eines Raketentriebwerks hängt maßgeblich von der Güte der Treibstoffumsetzung ab. Diese wiederum ist abhängig von der Art der Einspritzung, z.B. von der Anzahl und Anordnung der Einspritzelemente in dem Einspritzkopf. Bspw. werden für kryogene Treibstoffe, z.B. Wasserstoff und Sauerstoff, praktisch ausnahmslos sog. koaxiale Einspritzelemente verwendet. Bei diesen wird über ein zentrales Rohr der Sauerstoff in die Brennkammer eingespritzt. Über einen um das zentrale Rohr angeordneten Annulus wird der Wasserstoff in die Brennkammer eingespritzt. Dabei ist es bekannt, eine der Treibstoffkomponenten mit einem Drall versehen einzuspritzen, um deren Vermischung und damit Verbrennung zu verbessern. Die Verwendung koaxialer Einspritzelemente ist auch bei lagerfähigen Treibstoffen, wie z.B. LOX/HC oder MMH/NTO, bekannt.
spritzelemente ist auch bei lagerfähigen Treibstoffen, wie z.B. LOX/HC oder MMH/NTO, bekannt.

Es ist Aufgabe der vorliegenden Erfindung, einen Einspritzkopf für die Brennkammer eines Raketentriebwerks anzugeben, welcher eine gegenüber herkömmlichen Einspritzköpfen gesteigerte Effizienz bei der Umsetzung der Treibstoffe aufweist.

Diese Aufgabe wird durch einen Einspritzkopf mit den Merkmalen des unabhängigen Patentanspruches gelöst. Vorteilhafte Ausführungsformen finden sich in den abhängigen Patentansprüchen.

Der Erfindung liegt die Erkenntnis zugrunde, dass für eine ideale Umsetzung der Treibstoffe in der Brennkammer eine unendliche Anzahl von Elementen zur optimalen Verteilung und Vermischung der Treibstoffkomponenten in der Brennkammer notwendig wäre. Da dies aus praktischen Gründen jedoch nicht möglich ist, erzwingt die endliche Anzahl von Einspritzelementen, die über eine Grundfläche des Einspritzkopfs verteilt sind, eine diskrete Einspritzung. Dabei wurde festgestellt, dass bei der Einspritzung der Treibstoffe in die Brennkammer der Treibstoff bzw. der Oxidator am Auslass des Einspritzelements eine plötzliche Querschnittserweiterung erfährt. Dadurch entstehen in der Brennkammer nahe der Grundfläche zwischen den Einspritzelementen Freiräume, in denen während des Heißgasbetriebs verlustbehaftete Rezirkulationszonen gebildet werden. Durch die Rezirkulationszonen entsteht ein Druckverlust, ähnlich dem "carnotschen Stoßverlust". Der Druckverlust wirkt sich hierbei direkt proportional auf den Schubverlust aus. Die Grundfläche, über die die Anzahl an Einspritzelementen angeordnet ist, wird auch Kopfplatte oder Faceplate genannt.

Zur Vermeidung dieses Druckverlusts ist bei einem erfindungsgemäßen Einspritzkopf vorgesehen, dass die Grundfläche des Einspritzkopfs eine konturierte Gestalt aufweist, wobei durch die konturierte Gestalt die Entstehung von Zonen mit reduziertem Druck, insbesondere zwischen unmittelbar benachbarten Auslässen, verhindert oder zumindest vermindert wird. Durch die konturierte Grundfläche des Einspritzkopfes in der Brennkammer können die Rezirkulationszonen vermieden werden, wodurch die oben beschriebenen Druckverluste verhindert oder zumindest vermindert sind. Hierdurch lässt sich ein höherer Wirkungsgrad erzielen.

Die konturierte Gestalt der Grundfläche des Einspritzkopfs ist durch eine Anzahl an Erhebungen gebildet, welche sich zwischen den Einspritzelementen derart in die Brennkammer erstrecken, dass Freiräume zwischen den Auslässen vermieden sind. Die Konturierung hängt dabei allgemein von der Geometrie des Einspritzkopfes, d. h. von dem Typ, der Größe und der Anzahl der Einspritzelemente sowie deren Verteilung über die Grundfläche, ab.

Es hat sich als zweckmäßig herausgestellt, zwischen jeweils zwei Auslässen zumindest eine Erhebung anzuordnen. In einer weiteren Ausbildung ist zwischen jeweils zwei Auslässen genau eine Erhebung angeordnet. Dabei kann die Erhebung bauchig oder gewölbt ausgestaltet sein, so dass eine Querschnittserweiterung für die aus den Auslässen der Einspritzelemente austretenden Treibstoffkomponenten begrenzt ist bzw. definiert erfolgt.

Anders formuliert ist die Kopfplatte des Einspritzkopfes gemäß der Erfindung derart ausgebildet, dass die Einspritzelemente in trichterförmigen Vertiefungen angeordnet sind.

Es ist weiter zweckmäßig, wenn ein Fuß der Erhebung der konturierten Gestalt an mindestens einer der Auslässe angrenzt, um eine definierte Erweiterung des Querschnitts im Bereich der Auslässe der Einspritzelemente bereitzustellen und eine Querschnittserweiterung derart zu begrenzen, dass Zonen mit Druckverlusten in der Brennkammer vermieden werden können.

Eine weitere Ausbildung sieht vor, dass zwischen einem Auslass und einer die Brennkammer begrenzenden Wand eine Erhebung angeordnet ist. Hierdurch wird, wie oben beschrieben, ebenfalls die Bildung einer Rezirkulationszone zwischen der Brennkammerwand und dem Auslass eines benachbarten Einspritzelements vermieden, welche ebenfalls zu einer Effizienzverminderung führen würde.

Die konturierte Grundfläche kann gemäß einer Ausgestaltung in der Kopfplatte ausgebildet sein. Dies bedeutet, dass die Kontur in die Kopfplatte integriert ist. Alternativ kann die Konturgebung als zusätzlicher Körper auf eine im Wesentlichen ebene Kopfplatte aufgebracht werden, in welcher die Einspritzelemente angeordnet sind. Die konturierte Grundfläche ist dabei durch einen mit der gewünschten Kontur versehenen Körper bereitgestellt, der dann auf der Kopfplatte des Einspritzkopfs angeordnet ist. Der konturierte Körper kann metallisches und/oder nicht-metallisches Material umfassen, wobei die Wahl des Materials im Wesentlichen durch die thermische Belastung bestimmt ist.

Durch eine konturierte Kopfplatte eines Einspritzkopfs für die Brennkammer eines Raketentriebwerks ist eine Verbesserung in der Güte der Treibstoffumsetzung erzielbar. Durch die 3-dimensionale Oberfläche der Grundfläche des Einspritzkopfs wird ebenfalls das Stabilitätsverhalten beim Betrieb des Raketentriebwerks verbessert.

Die Erfindung wird nachfolgend anhand der Figuren näher erläutert. Es zeigen:
- Fig. 1: eine schematische Querschnittsdarstellung eines Teils eines Einspritzkopfs gemäß der Erfindung, und
- Fig. 2: eine schematische Querschnittsdarstellung eines Teils eines Einspritzkopfs, wie er aus dem Stand der Technik bekannt ist.

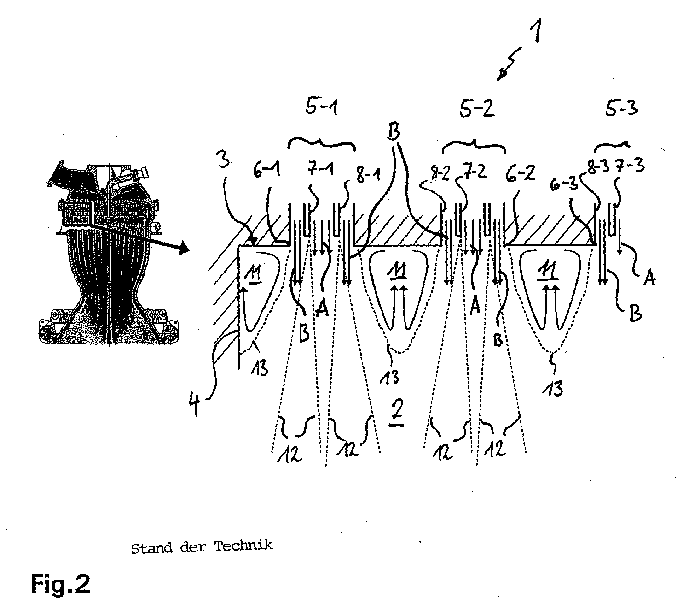

Fig. 2 zeigt in einer schematischen Querschnittsdarstellung einen Abschnitt eines Einspritzkopfs 1 für die Brennkammer eines Raketentriebwerks aus dem Stand der Technik. Der prinzipielle Aufbau eines Raketentriebwerks ist in der linken Hälfte der Figur dargestellt und ist einem Fachmann geläufig, so dass an dieser Stelle nicht näher darauf eingegangen wird. Die für die Erfindung relevanten Bereiche des Raketentriebwerks sind vergrößert dargestellt. Der Einspritzkopf 1 umfasst eine Brennkammer 2, die von einer Kopfplatte 3 und an die Kopfplatte 3 angrenzenden Brennkammerwänden 4 (von denen nur eine dargestellt ist) begrenzt ist. Die Brennkammerwände 4 verjüngen sich gegenüberliegend der Kopfplatte 3, so dass die Brennkammer 2 in eine Expansionsdüse mündet. An der Kopfplatte 3 sind im Ausführungsbeispiel der Fig. 2 drei koaxiale Einspritzelemente 5-1, 5-2, 5-3 angeordnet. Jedes der koaxialen Einspritzelemente 5-1, 5-2, 5-3 umfasst ein zentrales Rohr 7-1, 7-2, 7-3, welches von einem Annulus 8-1, 8-2, 8-3 umgeben ist. In dem Fachmann bekannter Weise wird durch das zentrale Rohr 7-1, 7-2, 7-3 eine erste Treibstoffkomponente in die Brennkammer eingespritzt, was durch das Bezugszeichen A gekennzeichnet ist, während über den Annulus 8-1, 8-2, 8-3 eine zweite Treibkomponente in die Brennkammer eingespritzt wird, was in Fig. 2 durch das Bezugszeichen B gekennzeichnet ist. In ebenfalls bekannter Weise kann durch entsprechende Ausgestaltung des zentralen Rohrs 7-1, 7-2, 7-3 und/oder des Annulus 8-1, 8-2, 8-3 eine der Treibstoffkomponenten mit einem Drall versehen werden, um eine bessere Vermischung der Treibstoffkomponenten in der Brennkammer 2 zu erzielen. Über einen jeweiligen Auslass 6-1, 6-2, 6-3 münden die Einspritzelemente 5-1, 5-2, 5-3 an der Kopfplatte 3 in die Brennkammer 2. Als Auslass ist im Rahmen der vorliegenden Beschreibung der äußere Durchmesser des koaxialen Einspritzelements zu verstehen. Als Treibstoffkomponenten können bspw. Wasserstoff und Sauerstoff als Oxidator verwendet werden. Denkbar ist auch LOX (flüssiger Sauerstoff) und HC oder MMH (Monomethylhydrazin) und NTO (Stickstofftetroxid) als Treibstoffkomponenten zu verwenden.

Beim Einspritzen der ersten und zweiten Treibstoffkomponente ergibt sich nach dem Austritt aus den Auslässen 6-1, 6-2, 6-3 eine Querschnittserweiterung, wobei eine gute Durchmischung der Treibstoffkomponenten in den mit dem Bezugszeichen 12 gekennzeichneten Verbrennungszonen erfolgt, welche sich in etwa trichterförmig von den Auslässen 6-1, 6-2, 6-3 erweitern. Gleichzeitig entstehen zwischen zwei benachbarten Auslässen 6-1, 6-2, 6-3 jeweiliger Einspritzelemente 5-1, 5-2, 5-3 sowie zwischen der Brennkammerwand 4 und dem benachbarten Auslass 6-1 des Einspritzelements 5-1 sog. Heißgas- oder Rezirkulationszonen 11. In diesen entsteht ein Druckverlust, der sich direkt proportional auf den Schubverlust auswirkt. Die Grenze zwischen den Rezirkulationszonen 11 und den Verbrennungszonen 12 ist durch die Grenzflächen 13 gekennzeichnet, welche die Form von bauchigen Erhebungen zwischen benachbarten Auslässen 6-1, 6-2, 6-3 aufweist.

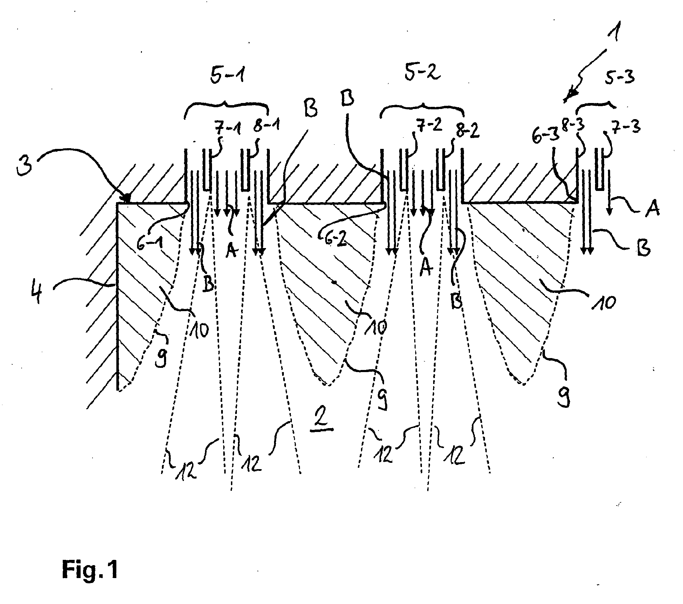

Zur Vermeidung oder Verringerung der Rezirkulationszonen 11 ist ein erfindungsgemäßer Einspritzkopf 1 an der Kopfplatte 3 mit einer konturierten Gestalt in Form von Erhebungen 10 versehen (vgl. Fig. 1). Die Erhebungen 10 sind bauchig bzw. gewölbt ausgestaltet, wobei ein jeweiliger Fuß einer Erhebung 10 an einen angrenzenden Auslass 6-1, 6-2, 6-3 grenzt. Dabei ergibt sich eine Kontur 9, die im Ausführungsbeispiel ähnlich dem Verlauf der Grenzflächen 13 aus Fig. 2 ausgebildet ist. Durch die Kontur 9 erfahren die aus den koaxialen Einspritzelementen 5-1, 5-2, 5-3 austretenden Treibstoffkomponenten keine plötzliche Querschnitterweiterung. Vielmehr wird durch die bauchige Kontur der Erhebungen 10 der Querschnitt der Auslässe 6-1, 6-2, 6-3 gezielt erweitert, so dass in der Brennkammer 2 zumindest nahezu ausschließlich Bereiche guter Treibstoffkomponenten durch Mischung vorliegen.

Wie aus einem Vergleich der Figuren 1 und 2 hervorgeht, entspricht die Kontur 9 des erfindungsgemäßen Einspritzkopfs 1 in Fig. 1 in etwa dem Verlauf der Grenzflächen 13 des bekannten Einspritzkopfs 1 aus Fig. 2. Die Gestalt der Kontur hängt allgemein von der Geometrie des Einspritzkopfs 1 und insbesondere vom Typ, der Größe und Anzahl der Einspritzelemente 5-1, 5-2, 5-3 ab. Obwohl im vorliegenden Ausführungsbeispiel gemäß Fig. 1 zwischen jeweils zwei Auslässen 6-1, 6-2, 6-3 sowie zwischen der Brennkammerwand 4 und dem Auslass 6-1 des Einspritzelements 5-1 jeweils genau eine Erhebung 10 angeordnet ist, so kann auch eine größere Anzahl zwischen jeweiligen Auslässen bzw. einem Auslass und der Brennkammerwand vorgesehen sein.

Die Konturgebung kann direkt in die Kopfplatte 3 integriert sein oder aber in Form eines zusätzlichen Körpers auf die Kopfplatte 3 aufgebracht sein, wie dies im Ausführungsbeispiel der Fig. 1 dargestellt ist. Das Material der Kontur 9 kann prinzipiell beliebig, z.B. metallisch und/oder nicht-metallisch ausgebildet sein, und wird insbesondere durch die thermische Belastung bestimmt.

Durch die Erfindung wird neben einer Verbesserung in der Güte der Treibstoffumsetzung aufgrund der 3-dimensionalen Oberfläche der Kopfplatte eine weitere Verbesserung in der Skalierbarkeit von sog. Subscale-Tests ermöglicht. Die Leistungscharakteristik von Einspritzelementen wird häufig in Triebwerken in verkleinertem Maßstab ermittelt. Dadurch ergeben sich in der Praxis gegebenenfalls im Vergleich zum originalgroßen Einspritzkopf unterschiedliche Zwischenräume zwischen benachbarten Einspritzelementen und damit unterschiedliche Verluste. Dies erschwert die Skalierbarkeit der Ergebnisse. Durch die konturierte Oberfläche der Kopfplatte können diese Verluste verringert und damit ebenfalls die Skalierbarkeit von sog. Subscale-Tests verbessert werden.

## Patentansprüche

1. Einspritzkopf (1) für die Brennkammer (2) eines Raketentriebwerks, der eine Grundfläche aufweist, über die eine Anzahl an Einspritzelementen (5) verteilt angeordnet ist, wobei jeweils aus einem Auslass (6) der Einspritzelemente (5) Treibstoffkomponenten in die Brennkammer (2) einspritzbar sind, so dass durch eine Vermischung und Verbrennung der Treibstoffkomponenten in der Brennkammer (2) ein Heißgas erzeugbar ist, welches zur Erzeugung von Schub auf eine hohe Geschwindigkeit beschleunigbar ist, **dadurch gekennzeichnet, dass** die Grundfläche des Einspritzkopfs (1) eine konturierte Gestalt aufweist, wobei durch die konturierte Gestalt die Entstehung von Zonen mit reduziertem Druck, insbesondere zwischen unmittelbar benachbarten Auslässen (6), verhindert oder zumindest vermindert wird.

2. Einspritzkopf (1) nach Anspruch 1, bei dem die konturierte Gestalt der Grundfläche des Einspritzkopfs (1) durch eine Anzahl an Erhebungen gebildet ist, welche sich zwischen den Einspritzelementen (5) derart in die Brennkammer (2) erstrecken, dass Freiräume zwischen den Auslässen (6) vermieden sind.

3. Einspritzkopf (1) nach Anspruch 2, bei dem zwischen jeweils zwei Auslässen (6) zumindest eine Erhebung (10) angeordnet ist.

4. Einspritzkopf (1) nach einem der Ansprüche 2 oder 3, bei dem zwischen jeweils zwei Auslässen (6) genau eine Erhebung (10) angeordnet ist.

5. Einspritzkopf (1) nach einem der Ansprüche 2 bis 4, bei dem die Erhebung (10) bauchig oder gewölbt ausgestaltet ist.

6. Einspritzkopf (1) nach einem der Ansprüche 2 bis 5, bei dem ein Fuß der Erhebung (10) an mindestens einen der Auslässe (6) angrenzt.

7. Einspritzkopf (1) nach einem der Ansprüche 2 bis 6, bei dem zwischen einem Auslass (6) und einer die Brennkammer (2) begrenzenden Wand (4) eine Erhebung (10) angeordnet ist.

8. Einspritzkopf (1) nach einem der vorherigen Ansprüche, bei dem die Einspritzelemente (5) in einer Kopfplatte (3) angeordnet sind und die konturierte Grundfläche in der Kopfplatte (3) ausgebildet ist.

9. Einspritzkopf (1) nach einem der vorherigen Ansprüche, bei dem die konturierte Grundfläche durch einen mit der gewünschten Kontur versehenen Körper bereitgestellt ist, der auf der Kopfplatte (3) des Einspritzkopfs (1) angeordnet ist.

10. Einspritzkopf (1) nach Anspruch 9, bei dem der konturierte Körper metallisches und/oder nicht-metallisches Material umfasst.
